Europäisches Patentamt

European Patent Office

Office européen des brevets

(19)

(11) Veröffentlichungsnummer : **0 038 369
B1**

(12) **EUROPÄISCHE PATENTSCHRIFT**

(45) Veröffentlichungstag der Patentschrift :
07.12.83

(21) Anmeldenummer : 80102061.1

(22) Anmeldetag : 17.04.80

(51) Int. Cl.³ : **F 16 H 55/22**

(54) **Biegsame Schnecke für ein Schneckengetriebe.**

(43) Veröffentlichungstag der Anmeldung :
28.10.81 Patentblatt 81/43

(45) Bekanntmachung des Hinweises auf die Patenterteilung : 07.12.83 Patentblatt 83/49

(84) Benannte Vertragsstaaten :
AT BE CH DE LI NL

(56) Entgegenhaltungen :
DE-A- 2 346 550
DE-A- 2 734 754
GB-A- 1 007 556

(73) Patentinhaber : **Jung, Heinz
Uhlandstrasse 6
D-6550 Bad Kreuznach (DE)**

(72) Erfinder : **Jung, Heinz
Uhlandstrasse 6
D-6550 Bad Kreuznach (DE)**

(74) Vertreter : **Schlee, Richard et al
Patentanwälte Dipl.-Ing. R. Schlee Dipl.-Ing. A. Missling Bismarckstrasse 43
D-6300 Giessen 1 (DE)**

Biegsame Schnecke für ein Schneckengetriebe

Die Erfindung bezieht sich auf eine biegsame, aus einer Wendel bestehende und durch Wickeln eines strangförmigen Gebildes hergestellte Schnecke für ein Schneckengetriebe, wobei das strangförmige Gebilde an seitlichen Rändern Verzahnungen mit so geformten Zähnen aufweist, daß an den Berührungsstellen zwischen ineinandergreifenden Zähnen an die Zahnflanken angelegte Tangenten (Zahnflankentangenten) in Richtung des Zahnkopfes konvergieren, und die Verzahnnungen im aufgewickelten Zustand des strangförmigen Gebildes zur Verhinderung einer gegenseitigen Verdrehung benachbarter Windungen ineinandergreifen.

Eine Schnecke dieser Art ist in der DE-A-23 46 550 beschrieben. Bei einer solchen Schnecke ist eine gegenseitige Verdrehung der Windungen weder im Sinne eines Zusammenziehens der Schnecke noch im Sinne eines Aufweitens der Schnecke möglich, da der formschlüssige Eingriff der Zähne in die Zahnlücken der benachbarten Windungen gegenseitige Verschiebungen zwischen den Windungen verhindert. Die Schnecke behält also stets ihren Durchmesser und paßt deshalb mit dem vorgesehenen Spiel in die Verzahnung eines zugeordneten Schneckenrades, so daß schädliche Verklemmungen vermieden werden. Hierdurch läßt sich eine sehr viel größere Lebensdauer der Schnecke erzielen. Biegsame Schnecken haben gegenüber starren Schnecken den Vorteil, daß gleichzeitig mehrere Schneckengänge voll mit einem Schneckenrad in Eingriff gebracht werden können.

In der genannten DE-A sind symmetrische, sich zum Zahnende hin verjüngende Zähne dargestellt, nämlich trapezförmige Zähne und Zähne mit gewölbten Flanken. Diese Zahnform ist für das Wickeln der Schnecke aus dem strangförmigen Gebilde vorteilhaft, da sich die Zahnlücken trichterartig nach außen erweitern, so daß das Einführen der Zähne in die Zahnlücken bequem möglich ist. Wenn die Schnecke ein Drehmoment übertragen muß, werden die Zahnflanken aneinandergepreßt. Infolge ihrer Schräge entstehen dabei Kraftkomponenten, die die Schneckenwindungen auseinanderzutreiben versuchen. Um ein Auseinanderdrücken der Schneckenwindungen zu vermeiden, mußten diese unter Umständen axial verspannt werden, was jedoch für die Biegsamkeit der Schnecke nachteilig ist.

Bei Zähnen mit geraden Zahnflanken liegen die Flanken ineinandergreifender Zähne im wesentlichen über ihre gesamten Längen aneinander an. Bei Zähnen mit gewölbten Zahnflanken haben ineinandergreifende Zähne nur eine Linienberührung. Charakteristisch für die Tendenz, die Schneckenwindungen auseinanderzutreiben, ist bei Zähnen mit gewölbten Flanken die Neigung der Zahnflankentangenten an den Berührungsstellen der Zähne. Bei geraden Zahnflanken liegen diese Tangenten in den Zahnflanken.

Der Erfindung liegt die Aufgabe zugrunde, die Zähne des strangförmigen Gebildes so zu gestalten, daß die Kräfte, die die Schnecke auseinanderzudrücken versuchen, reduziert oder vollständig beseitigt werden.

Diese Aufgabe wird nach der Erfindung dadurch gelöst, daß die beiden Zahnflankentangenten eines Zahnes verschieden steil und so geneigt sind, daß die weniger steile Zahnflankentangente infolge des Steigungswinkels ($\gamma$) der Schneckenwindungen mit parallel zur Schneckenachse verlaufenden Mantellinien der Schnecke einen kleineren Winkel ($\delta$) einschließt als mit Ebenen, die rechtwinklig zur Längsrichtung des strangförmigen Gebildes orientiert sind.

Das Wickeln einer so ausgebildeten Schnecke ist unproblematisch, da sich die Zähne ebenfalls nach außen verjüngen, so daß sich die Zahnlücken nach außen verbreitern und das Einführen von Zähnen in Zahnlücken bequem möglich ist. Die Lage der Zahnflanken an der fertigen Schnecke ist günstiger als bei symmetrischen Zähnen, da beide Zahnflankentangenten nur einen kleinen Winkel mit Mantellinien der Schnecke einschließen. Es ist auch erreichbar, daß eine Zahnflankentangente parallel zu Mantellinien liegt. Die Tendenz gegen ein Auseinandertreiben ist deshalb gering oder auch überhaupt nicht vorhanden, nämlich dann, wenn der Winkel, den die Zahnflankentangenten mit Mantellinien einschließen, gleich oder kleiner als der Reibungswinkel ist, der von der Auswahl des Schneckenmaterials und vom Schmierungszustand abhängig ist. Geringe Kräfte, die die Schneckenwindungen auseinanderzutreiben versuchen, können oft in Kauf genommen werden, da solche Kräfte leicht aufgefangen werden können.

Beide Zahnflanken jedes Zahnes sind gemäß Anspruch 3 vorzugsweise gerade. Dies ist jedoch keine notwendige Bedingung, d. h. die Flanken können auch gekrümmt sein. Man könnte auch an einem Rand des strangförmigen Gebildes Zähne mit geraden Flanken und am anderen Rand Zähne mit gewölbten Flanken vorsehen.

Die erfindungsgemäßen Zähne können bei verschiedenen Querschnitten des strangförmigen Gebildes vorgesehen werden. Besonders vorteilhaft ist jedoch die im Anspruch 4 angegebene, an sich bekannte Querschnittsform mit seitlichen Flanschen. Im Rahmen der Erfindung sind verschiedene Zahnformen möglich, wozu in den Ansprüchen 5 bis 8 Beispiele angegeben sind. Bei Flanken bzw. Zahnflankentangenten rechtwinklig zur Längsrichtung des strangförmigen Gebildes an einer Seite jedes Zahnes (Anspruch 5) schließt diese Flanke mit Mantellinien des Schnecke einen Winkel ein, der gleich dem Steigungswinkel der Wendel ist. Man wird diese Form im allgemeinen zusammen mit Schnecken anwenden, bei denen der Steigungswinkel in det Nähe des Reibungswinkels liegt oder kleiner als der Reibungswinkel ist. Wenn gemäß Anspruch 6 eine Flanke jedes Zahnes parallel zu Mantellinien ist, können bei einer Drehrichtung der Schnecke, nämlich bei der Drehrichtung, bei der diese zu Mantellinien parallelen Flanken belastet werden, überhaupt keine axialen Kräfte auftreten, und zwar selbst dann nicht, wenn überhaupt keine Reibung vorhanden wäre, was ja praktisch ohnehin nie der Fall ist. Eine Flanke jedes Zahnes kann gemäß Anspruch 7 auch durch eine Hinterschneidung gebildet sein. Auch hiermit läßt sich z. B. erreichen, daß die Flanken parallel zu Mantellinien der Schnecke verlaufen. Man kann auch (nicht nur mit hinterschnittenen Flanken) erreichen, daß der Winkel mit den Mantellinien sozusagen negativ wird, d. h. so orientiert ist, daß unter dem Einfluß des Drehmomentes ein Zusammenziehen der Schneckenwindungen stattfindet. Die Zahnform kann auch gemäß Anspruch 8 ausgebildet sein, d. h. so, daß trapezförmige Zahnquerschnitte entstehen, wobei kein Trapezwinkel ein rechter Winkel ist.

Wenn bei den beiden Drehrichtungen der Schnecke verschieden große Drehmomente auftreten, wird man die Schnecke vorteilhafterweise so ausbilden, daß die Lage der Zahnflankentangenten bei dem großen Drehmoment günstiger ist als bei dem kleineren Drehmoment, d. h. daß bei dem größeren Drehmoment der Winkel, den die Zahnflankentangenten mit Mantellinien der Schnecke einschließen, möglichst klein, Null oder sogar negativ ist.

In der Zeichnung sind Ausführungsbeispiele der Erfindung dargestellt. Es zeigen :

Figur 1    eine Seitenansicht eines Schneckengetriebes mit biegsamer Schnecke,

Figur 2    einen Schnitt durch das Getriebe entsprechend der Linie II-II in Fig. 1,

Figur 3    eine Ansicht eines strangförmigen Gebildes, aus dem die Schnecke des Schneckengetriebes hergestellt wird,

Figur 4    einen Schnitt nach Linie IV-IV in Fig. 3,

Figur 5    eine Teilansicht einer erfindungsgemäßen Schnecke im geradegestreckten Zustand,

Figur 6    einen vergrößerten Ausschnitt aus Fig. 5 im Bereich des strichpunktierten Rahmens VI in Fig. 5,

Figur 7    eine der Fig. 6 entsprechende Teildarstellung bei einer anderen Zahnform und

Figur 8    eine den Fig. 6 und 7 entsprechende Darstellung bei einer weiteren Zahnform.

In der Zeichnung sind auschließlich Ausführungsformen mit geraden Zahnflanken dargestellt. Die anhand der Zeichnung angestellten Betrachtungen gelten analog für Zähne mit gekrümmten Zahnflanken, wenn man die in der folgenden Beschreibung für gerade Zahnflanken angegebenen Winkel auf Tangenten bezieht, die an gekrümmten Zahnflanken an den Berührungsstellen ineinandergreifender Zähne angelegt und in Richtung vom Zahnfuß zum Zahnkopf orientiert sind.

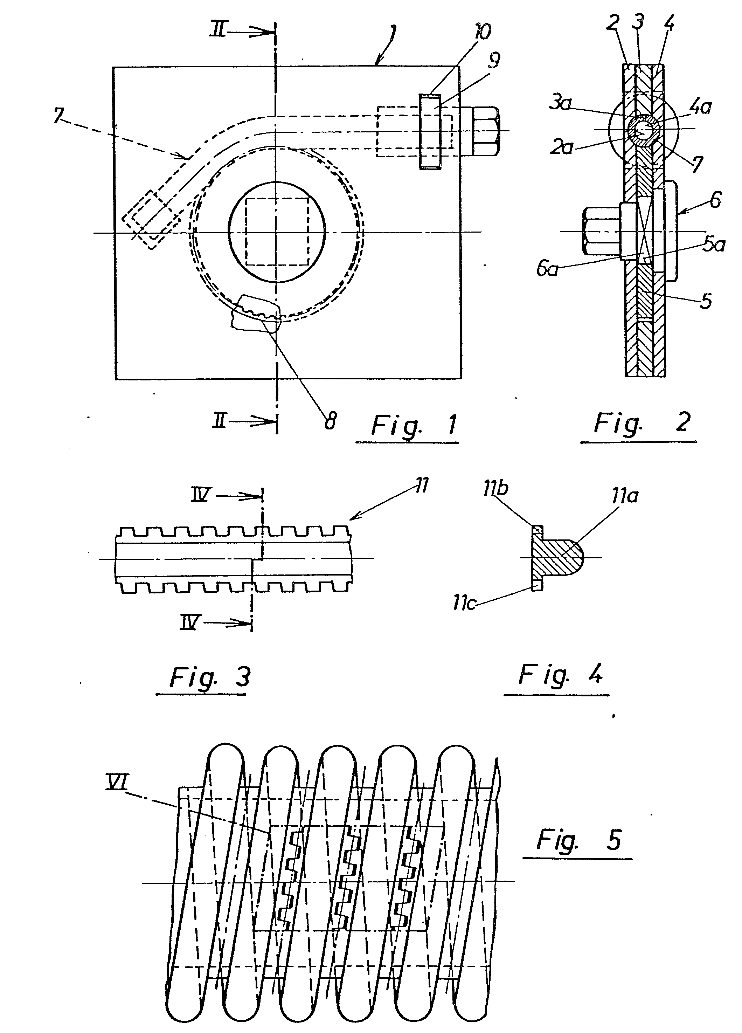

Das in den Fig. 1 und 2 gezeigte Schneckengetriebe hat ein Gehäuse 1, das aus drei aufeinanderliegenden Platten 2, 3 und 4 zusammengesetzt ist, die z. B. mittels Schrauben (nicht gezeigt) miteinander verbunden sind. Zwischen den äußeren Platten 2 und 4 ist ein Schneckenrad 5 gelagert. Das Schneckenrad sitzt auf einer insgesamt mit 6 bezeichneten Welle, die einen Vierkantabschnitt 6a aufweist, der in ein Vierkantloch 5a des Schneckenrades 5 eingreift.

Das Schneckenrad 5 ist über einen Teil seines Umfanges von einer biegsamen Schnecke 7 umgeben. Diese ist in rillenförmigen Vertiefungen 2a und 4a det Platten 2 und 4 sowie an einer Fläche 3a der Platte 3 geführt und greift mit ihren Windungen in Zahnlücken 8 am Schneckenrad 5 ein.

Zur axialen Sicherung der Schnecke ist ein Bund 9 vorgesehen, der fest mit der Schnecke verbunden ist und in ein Fenster 10 am Gehäuse eingreift.

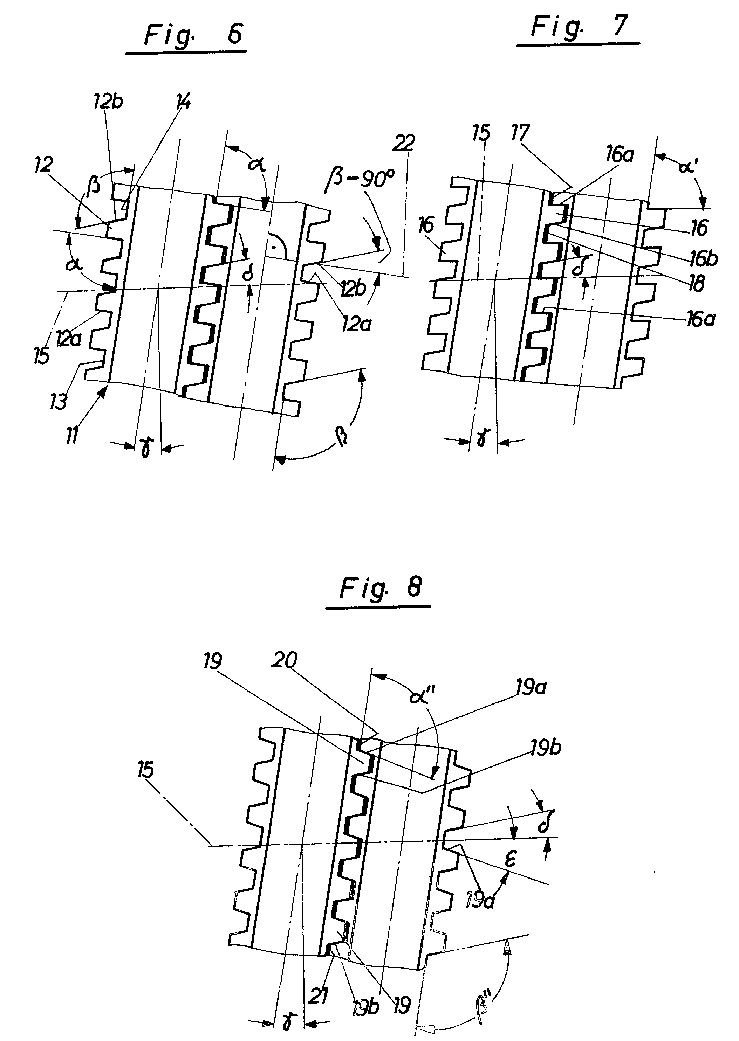

Die Schnecke 7 ist aus einem strangförmigen Gebilde, wie es in den Fig. 3 und 4 dargestellt ist, gewickelt. Dieses strangförmige Gebilde ist insgesamt mit 11 bezeichnet und hat den aus Fig. 4 ersichtlichen Querschnitt. Der Teil 11a des Querschnittes dient zur Bildung der Schneckengänge, während die leistenartigen Flansche 11b und 11c mit noch im einzelnen zu beschreibenden Verzahnungen versehen sind, die beim Wickeln der Schnecke aus dem zunächst noch gestreckten strangförmigen Gebilde in Eingriff miteinander gebracht werden. Bei einer eingängigen Schnecke werden also die an der Randleiste 11b befindlichen Zähne mit Zahnlücken in Eingriff gebracht, die sich an der Leiste 11c befinden. Die fertige Schnecke hat dann ein Aussehen entsprechend Fig. 5. Die Fig. 3, 4 und 5 sind gegenüber üblichen tatsächlichen Verhältnissen vergrößert. Allerdings könnten auch Schneckengrößen entsprechend Fig. 5 hergestellt werden. Die Form der Zähne soll nun anhand der Fig. 6 betrachtet werden.

Die Zähne 12 sind trapezförmig und haben Flanken 12a und 12b. Die Flanken sind verschieden geneigt, wobei die Flanke 12a steiler ist als die Flanke 12b. Die Flanke 12a schließt mit dem Grund 13 der benachbarten Zahnlücke einen Winkel $\alpha$ von 90° ein. Der Winkel $\beta$, den die andere Zahnflanke 12b mit dem Zahnlückenboden 14 einschließt, ist größer als 90° und kann beispielsweise 110° betragen.

Die strichpunktierte Linie 15 stellt eine Mantellinie der Schnecke dar, also eine Linie, die parallel zur Schneckenachse verläuft. Der Steigungswinkel ist demgemäß $\gamma$. Es sei angenommen, daß $\gamma$ hier die Größe von 10° habe. Im vorangehenden und im folgenden wird stets von einer Winkelteilung gesprochen, bei der ein rechter Winkel in neunzig Winkelgrade unterteilt ist. Aufgrund der Steigung $\gamma$ der Schnecke werden die weniger steilen Flanken 12b so verdreht, daß der Winkel $\delta$, den diese Flanken mit Mantellinien 15 bilden, den Betrag $\beta$-90-$\gamma$ haben, d. h. im vorliegenden Fall ist $\delta = 10°$. Die steilen Flanken 12a, die ja rechtwinklig zur Längsrichtung des strangförmigen Gebildes 11 verlaufen, haben in diesem Fall ebenfalls eine Schräglage von 10° relativ zu Mantellinien 15.

Der Winkel, den die weniger steile Flanke mit der Ebene 22, die rechtwinklig zur Längsrichtung des strangförmigen Gebildes 11 verläuft, einschließt, hat die Größe β-90°. Dieser Winkel ist größer als der Winkel δ. Es gilt δ = β-90°-γ.

Bei Ausübung eines Drehmomentes auf die Schnecke derart, daß die weniger steilen Flanken 12b beansprucht werden, also z. B. bei einer Rechtsdrehung der Schnecke entsteht eine gewisse axiale Komponente, die die Windungen auseinanderzudrücken versucht. Bei entgegengesetzter Drehrichtung werden die steilen Flanken 12a belastet, wobei ebenfalls eine Komponente entsteht, die die Windungen auseinanderzudrücken versucht. Da aber der Winkel δ etwa gleich dem Reibungswinkel ist, findet ein Auseinanderdrücken nicht statt. Wesentlich an der Erfindung ist, daß die weniger steile Flanke so orientiert wird, daß der Steigungswinkel der Wendel diese Flanke sozusagen in Richtung auf die Mantellinien 15 der Schnecke ausrichtet.

Bei der Ausführungsform nach Fig. 7 sind die Zähne insgesamt mit 16 bezeichnet. Die Zähne haben Flanken 16a und 16b. Die Flanke 16b schließt mit der Grundfläche 17 der benachbarten Zahnlücke, die parallel zur Längsrichtung des strangförmigen Gebildes verläuft, einen Winkel α', ein, der kleiner ist als 90°. Der Winkel beträgt 90°-γ, so daß an der fertigen Wendel die Flanken 16a parallel zu Mantellinien 15 verlaufen.

Die Flanke 16b schließt mit dem benachbarten Zahnlückenboden 18 den gleichen Winkel β ein wie bei der Ausführungsform nach Fig. 6. Daraus ergibt sich, daß an der gewickelten Schnecke zwischen den Flanken 16b und den Mantellinien der gleiche Winkel δ besteht wie bei der Ausführungsform nach Fig. 6.

Bei einer Beanspruchung der Schnecke derart, daß die Flanken 16a belastet werden, kann überhaupt keine axiale Komponente entstehen, da die Flanken parallel zu Mantellinien verlaufen. Bei entgegengesetzter Drehrichtung sind die Verhältnisse zwar nicht ganz so günstig, jedoch entsteht auch dann kein Auseinanderrücken, wenn der Winkel δ gleich oder kleiner ist als der Reibungswinkel. Eine Schnecke nach Fig. 7 ist dann von besonderem Vorteil, wenn bei einer Drehrichtung ein wesentlich größeres Drehmoment auftritt als bei entgegengesetzter Drehrichtung. Man wird dann die Schnecke so ausbilden, daß bei dem stärkeren Drehmoment die Flanken 16a belastet werden.

Bei der Ausführungsform nach Fig. 8 sind die Zähne insgesamt mit 19 bezeichnet. Auch diese Zähne haben eine steilere Flanke 19a und eine weniger steile Flanke 19b. Der Winkel, den die Flanke 19a mit dem benachbarten Zahnlückenboden 20 einschließt, ist größer als 90° und mit α « bezeichnet. Der Winkel, den die weniger steile Zahnflanke 19b mit der benachbarten Zahnlücke 21 einschließt, ist ebenfalls größer als 90° und mit β » bezeichnet. β « ist größer als α ».

Auch hier ist der Steigungswinkel γ mit 10° gewählt. Die Winkel β « und α » sind so gewählt,

daß der Winkel δ, mit dem die Flanken 19b zu Mantellinien (15) der Schnecke schrägstehen, etwa gleich oder kleiner als der Reibungswinkel ist. Der entsprechende Winkel ε für die Flanken 19a ist ein wenig von δ verschieden, jedoch ebenfalls im Bereich des Reibungswinkels oder kleiner als dieser.

Sämtliche Zeichnungen zeigen einen Zustand, bei dem die Schnecke geradegestreckt ist. Bei einer Biegung der Schnecke werden die Zähne mehr oder weniger auseinandergezogen, wobei die Zähne an der Außenseite der Biegung am weitesten auseinandergezogen sind, während sie an der Innenseite der Biegung voll im Eingriff miteinander sind.

**Ansprüche**

1. Biegsame, aus einer Wendel bestehende und durch Wickeln eines strangförmigen Gebildes hergestellte Schnecke für ein Schneckengetriebe, wobei das strangförmige Gebilde an seitlichen Rändern Verzahnungen mit so geformten Zähnen aufweist, daß an den Berührungsstellen zwischen ineinandergreifenden Zähnen an die Zahnflanken angelegte Tangenten (Zahnflankentangenten) in Richtung des Zahnkopfes konvergieren, und die Verzahnungen im aufgewickelten Zustand des strangförmigen Gebildes zur Verhinderung einer gegenseitigen Verdrehung benachbarter Windungen ineinandergreifen, dadurch gekennzeichnet, daß die beiden Zahnflankentangenten (12a, 12b ; 16a, 16b ; 19a, 19b) eines Zahnes (12 ; 16 ; 19) verschieden steil und so geneigt sind, daß die weniger steile Zahnflankentangente (12b ; 16b ; 19b) infolge des Steigungswinkels (δ) der Schneckenwindungen mit parallel zur Schneckenachse verlaufenden Mantellinien (15) der Schnecke einen kleineren Winkel (δ) einschließt als mit Ebenen (22), die rechtwinklig zur Längsrichtung des strangförmigen Gebildes (11) orientiert sind.

2. Biegsame Schnecke nach Anspruch 1, dadurch gekennzeichnet, daß beide Zahnflankentangenten (12a, 12b ; 16a, 16b ; 19a, 19b) mit Mantellinien (15) der Schnecke Winkel (δ) einschließen, die kleiner oder nur wenig größer als der Reibungswinkel zwischen den Zahnflankentangenten sind.

3. Biegsame Schnecke nach einem der vorhergehenden Ansprüche, dadurch gekennzeichnet, daß beide Flanken jedes Zahnes (12 ; 16 ; 19) gerade sind.

4. Biegsame Schnecke nach einem der vorhergehenden Ansprüche, dadurch gekennzeichnet, daß das strangförmige Gebilde (11) in an sich bekannter Weise an seinen Rändern leistenartige Flansche (11b, 11c) aufweist, an denen sich die Verzahnungen befinden.

5. Biegsame Schnecke nach einem der vorhergehenden Ansprüche, dadurch gekennzeichnet, daß eine Zahnflankentangente (12a) jedes Zahnes (12) rechtwinklig zur Längsrichtung des strangförmigen Gebildes verläuft und die andere Zahnflankentangente mit ihrem Zahnlückenboden einen Winkel $\beta > 90°$ einnimmt.

6. Biegsame Schnecke nach einem der vorhergehenden Ansprüche 1 und 3 bis 5, dadurch gekennzeichnet, daß eine Zahnflankentangente (16a) jedes Zahnes parallel zu Mantellinien (15) der Schnecke verläuft.

7. Biegsame Schnecke nach einem der vorhergehenden Ansprüche, dadurch gekennzeichnet, daß eine Flanke (16a) jedes Zahnes (16) durch eine Hinterschneidung gebildet ist.

8. Biegsame Schnecke nach einem der Ansprüche 1 bis 6, dadurch gekennzeichnet, daß beide Zahnflankentangenten (19a, 19b) jedes Zahnes (19) mit den anschließenden Zahnlückenböden (20, 21) stumpfe Winkel ($\alpha''$, $\beta''$) einschließen.

## Claims

1. A flexible worm for a worm gearing, which comprises a helix and is produced by winding a cord-shaped structure, lateral edges of the cord-shaped structure comprising indentations with teeth formed in such a way that at the contact points between teeth engaging in one another the tangents to the tooth flanks converge in the direction of the tip of the tooth, and in the wound state of the cord-shaped structure the indentations engage in one another in order to prevent mutual turning of adjacent windings, characterized in that the two tooth flank tangents (12a, 12b ; 16a, 16b ; 19a, 19b) of a tooth (12 ; 16 ; 19) are of different pitch and are inclined in such a way that as a result of the angle of inclination ($\gamma$) of the worm windings the less steeply pitched tooth flank tangent (12b ; 16b ; 19b) forms a smaller angle ($\delta$) with generatrices (15) of the worm extending parallel to the worm axis than with planes (22) which are orientated at right angles to the longitudinal direction of the cord-shaped structure (11).

2. A flexible worm according to Claim 1, characterized in that the two tooth flank tangents (12a, 12b ; 16a, 16b ; 19a, 19b) form, with the generatrices (15) of the worm, angles ($\delta$) which are smaller or only slightly larger than the angle of friction between the tooth flank tangents.

3. A flexible worm according to any one of the preceding Claims, characterized in that both flanks of each tooth (12 ; 16 ; 19) are straight.

4. A flexible worm according to any one of the preceding Claims, characterized in that the edges of the cord-shaped structure (11) comprise, in a manner known per se, strip-like flanges (11b, 11c) on which the indentations are provided.

5. A flexible worm according to any one of the preceding Claims, characterized in that one tooth flank tangent (12a) of each tooth (12) extends at right angles to the longitudinal direction of the cord-shaped structure and the other tooth flank tangent forms an angle $\beta > 90°$ with the bottom of its tooth gap.

6. A flexible worm according to any one of the preceding Claims 1 and 3 to 5, characterized in that one tooth flank tangent (16a) of each tooth extends parallel to generatrices (15) of the worm.

7. A flexible worm according to any one of the preceding Claims, characterized in that one flank (16a) of each tooth (16) is formed by a back taper.

8. A flexible worm according to any one of Claims 1 to 6, characterized in that both tooth flank tangents (19a, 19b) of each tooth (19) form obtuse angles ($\alpha''$, $\beta''$) with the adjacent bottoms (20, 21) of the tooth gaps.

## Revendications

1. Vis souple, constituée par une hélice et réalisée par enroulement d'un élément en forme de cordon, pour un engrenage à vis sans fin, l'élément en forme de cordon présentant, sur des bords latéraux, des dentures avec des dents conformées de manière que, au niveau des points de contact entre des dents, qui s'engrènent les unes dans les autres, les tangentes aux flancs de ces dents convergent en direction du sommet de la dent, et, à l'état enroulé de l'élément en forme de cordon, les dentures s'engrènent les unes dans les autres pour empêcher une rotation relative de spires voisines, caractérisée par le fait que les tangentes aux deux flancs (12a, 12b ; 16a, 16b ; 19a, 19b) d'une dent (12 ; 16 ; 19) ont des pentes différentes et sont inclinées de telle sorte que la tangente la moins inclinée, à un flanc de la dent (12b ; 16b ; 19b), par suite de l'angle d'inclinaison ($\gamma$) des spires de la vis, fait avec des génératrices (15) de la vis, parallèles à son axe, un angle ($\delta$) plus petit que avec des plans (22) qui sont orientés à angle droit de la direction longitudinale de l'élément en forme de cordon (11).

2. Vis souple selon la revendication 1, caractérisée par le fait que les tangentes aux deux flancs (12a, 12b ; 16a, 16b ; 19a, 19b) d'une dent font, avec des génératrices (15) de la vis, des angles ($\delta$) qui sont plus petits ou seulement un peu plus grands que l'angle de frottement entre les tangentes aux flancs des dents.

3. Vis souple selon l'une des revendications précédentes, caractérisée par le fait que deux flancs de chaque dent (12 ; 16 ; 19) sont droits.

4. Vis souple selon l'une des revendications précédentes, caractérisée par le fait que l'élément en forme de cordon (11) présente, de façon connue en soi, sur ses bords, des ailes en forme de languettes (11b, 11c), sur lesquelles se trouvent les dentures.

5. Vis souple selon l'une des revendications précédentes, caractérisée par le fait que la tangente à l'un des flancs (12a) de chaque dent (12) est à angle droit de la direction longitudinale de l'élément en forme de cordon, et que la tangente à l'autre flanc de la dent fait un angle $\beta > 90°$ avec le fond de l'intervalle dentaire.

6. Vis souple selon l'une des revendications précédentes 1 et 3 à 5, caractérisée par le fait que la tangente à l'un des flancs (16a) de chaque dent est parallèle aux génératrices (15) de la vis.

7. Vis souple selon l'une des revendications précédentes, caractérisée par le fait qu'un flanc (16a) de chaque dent (16) est formé par un détalonnage.

8. Vis souple selon l'une des revendications 1 à 6, caractérisée par le fait que les tangentes aux deux flancs (19a, 19b) de chaque dent (19) font des angles obtus ($\alpha''$, $\beta''$) avec les fonds des intervalles dentaires voisins.

Fig. 1

Fig. 2

Fig. 3

Fig. 4

Fig. 5

## Fig. 6

## Fig. 7

## Fig. 8

2